(19) Europäisches Patentamt
European Patent Office
Office européen des brevets

(11) Veröffentlichungsnummer: **0 443 166 A1**

(12) **EUROPÄISCHE PATENTANMELDUNG**

(21) Anmeldenummer: **90124700.7**

(51) Int. Cl.5: **C08F 220/44**, D01F 6/38

(22) Anmeldetag: **19.12.90**

(30) Priorität: **21.02.90 DE 4005377**

(43) Veröffentlichungstag der Anmeldung:
**28.08.91 Patentblatt 91/35**

(84) Benannte Vertragsstaaten:
**DE FR GB IT**

(71) Anmelder: **BAYER AG**

**W-5090 Leverkusen 1 Bayerwerk(DE)**

(72) Erfinder: **Michels, Gisbert, Dr.**
**Andreas-Gryphiusstrasse 9**
**W-5000 Köln 90(DE)**
Erfinder: **Korte, Siegfried, Dr.**
**Engstenberger Hoehe 3**
**W-5068 Odenthal Osenau(DE)**
Erfinder: **Engelhard, Helmut, Dr.**
**Moltkestrasse 9**
**W-4047 Dormagen(DE)**
Erfinder: **Arndt, Uwe, Dr.**
**Malteserstrasse 85**
**W-5000 Köln 40(DE)**
Erfinder: **Spilgies, Günter, Dr.**
**Wachtelweg 2**
**W-4047 Dormagen(DE)**

(54) **Phosphonsäureester enthaltende Acrylnitril(co)polymerisate.**

(57) Gegenstand der Erfindung sind Acryl- und Modacryl(co)polymerisate auf Basis von Acrylnitril und Monomeren mit Carboxyl- und/oder Carboxylatgruppen (I)

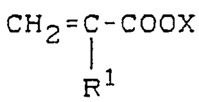
(I),

mit $R^1$ = H, $CH_3$, $CH_2$-COOX,
X = H, Metallionenäquivalent der 1. Gruppe und 2. Haupt- und Nebengruppe des PS und Al, vorzugsweise Na, K, Mg, Ca, Zn, Al, vorzugsweise Acrylsäure, Methacrylsäure, Itaconsäure oder ihre Salze als Monomere, sowie Monomeren mit Phosphonsäureesteralkylgruppen (II) oder (III),

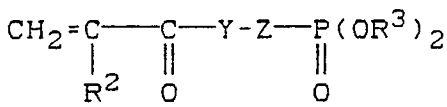
(II)

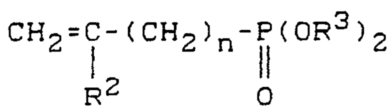
(III)

mit
n = 1 bis 3, vorzugsweise n = 1
$R^2$ = H, Alkyl,
$R^3$ = $C_1$-$C_4$-Alkyl und $C_6$-$C_{12}$-Aryl,
Y = zweiwertiger Rest -O-, -NH-, >N-Alkyl,

EP 0 443 166 A1

Z = zweiwertiger $C_1$-$C_4$-Alkylen- und $C_6$-$C_{12}$-Arylenrest,
daraus hergestellte Formkörper, insbesondere Fasern, sowie die Verwendung dieser Fasern zur Herstellung textiler, schwerentflammbarer, halogenfreier Materialien, bei denen die verbesserte Flammwidrigkeit auch bei Verwendung von Lösungsmitteln beständig bleibt.

Gegenstand der Erfindung sind neue Acryl- und Modacryl(co)polymerisate auf Basis von Acrylnitril und Monomeren mit Carboxyl- und/oder Carboxylatgruppen (I) sowie Monomeren mit Phosphonsäureesteralkylgruppen (II) (III), daraus hergestellte Formkörper, insbesondere Fasern, sowie die Verwendung dieser Fasern zur Herstellung textiler, schwerentflammbarer, halogenfreier Materialien, bei denen die verbesserte Flammwidrigkeit auch bei Verwendung von Lösungsmitteln beständig bleibt.

Es besteht ein wachsender Bedarf an Fasermaterialien (Fasergarne, Filamentgarne, Vliese und daraus hergestellte textile Artikel) mit erhöhter Flammwidrigkeit bei Verzicht auf halogenhaltige Zusätze. Synthesefasern mit chlorhaltigen Additiven oder Comonomeren spalten im Brandfall Chlorwasserstoff ab, der in den Verbrennungsmechanismus eingreift und eine Oxidation der Pyrolyseprodukte verhindert. Die Bildung von aggressivem Chlorwasserstoff hat aber schwerwiegende Nachteile, da es im Brandfall inhalationstoxisch ist, sowie Korrosionsschäden an Metallen, Maschinen und Geräten hervorruft.

Schwerentflammbare, selbstverlöschende Modacrylfasern enthalten in der Regel einen hohen Gewichtsanteil an Vinyl- oder Vinylidenchlorid und zusätzlich als Synergist zur Erhöhung der Schwerentflammbarkeit Antimon(V)oxid.

Zur Synthese halogenfreier, schwerentflammbarer Acryl- und Modacrylfasern eignen sich prinzipiell phosphorhaltige Verbindungen, die entweder als Additive oder als radikalisch polymerisierbare Monomere vorliegen können.

Aus der Literatur (H. Herlinger, Textilpraxis international 1979, 1100-1105) ist bekannt, daß ein phosphorhaltiges Monomer der Formel

$$CH_2{=}CH{-}COOCH_2CH_2{-}\overset{\overset{\displaystyle O}{\|}}{P}(OCH_3)_2$$

zur Erhöhung der Schwerbrennbarkeit beitragen kann.

Nachteilig ist, daß zur Erzielung einer verminderten Brennbarkeit, ein verhältnismäßig hoher Anteil an (II) mit den angegebenen Resten $R^2$ = H und $R^3$ = $CH_3$ und Y = O, Z = $(CH_2)_2$ eingesetzt werden muß.

Der Einfluß von Carboxylgruppen auf die Entflammbarkeit und das Brennverhalten von Acrylnitrilfasern wird bereits in der Patentschrift J6 2015-318-A dokumentiert.

Dort werden Fasern beansprucht, die aus einem Copolymer mit 65 bis 95 Gew.-% Acrylnitril und einem Metallcarboxylat bestehen, wobei das Metall einwertig ist und Li, Na, K sein kann. Von entscheidendem Nachteil ist der hohe Quellgrad (10 bis 300 ccm Wasser/g Faser), der einen universellen Einsatz dieser Faser nicht zuläßt. Dies trifft im besonderen Maß für den Einsatz im textilen Bereich zu. Bekanntermaßen besitzen Copolymerisate und daraus hergestellte Fasern aus Acrylnitril und Carboxylgruppen enthaltenden Monomeren eine schlechte thermische Stabilität und neigen zur Verfärbung.

Auch in der deutschen Patentschrift 2 422 642 wird der Einfluß der Carboxyl- bzw. Carboxylatgruppen auf das Brennverhalten erwähnt. Es wird zunächst eine Vernetzung der beanspruchten Formkörper, d.h. Fasern vorgenommen, und anschließend durch Hydrolyse geeigneter Gruppen im Polymerisat Carboxyl- und Carboxylatgruppen eingeführt. Nachteilig an dieser Vorgehensweise ist, daß bekanntermaßen durch Vernetzung sehr spröde Produkte entstehen, die nur noch geringe Festigkeiten (0,88 bis 1,32 cN/dtex) aufweisen.

In der DE-A 2 052 568 ist der Einfluß phosphorhaltiger Monomerer in einem Acrylpolymerisat auf das Brennverhalten beschrieben. Bei diesen phosphorhaltigen Monomeren handelt es sich um ethylenisch ungesättigte Phosphinoxid-Derivate, also um Verbindungen, die strukturell andersartig aufgebaut sind als Verbindungen in Anspruch 1. Zur Verbesserung des Flammschutzes werden halogenhaltige Monomere vorgeschlagen. Dies ist aber nach den eingangs erwähnten Gründen heute unerwünscht.

In der EP-A 89 654 werden Copolymere aus Acrylnitril und 2-Acrylamido-2-methyl-propanphosphonsäure und deren Salze, zur Erzielung einer verminderten Entflammbarkeit beschrieben. In welchem Ausmaß eine verminderte Entflammbarkeit der beschriebenen Polymere vorliegt, ist nicht nachzuvollziehen.

Ein Verfahren, das gemäß Anspruch 1 das Phosphonsäureester-haltige Monomere einpolymerisiert enthält, bietet gegenüber Verfahren, die polymere Additive für eine Flammschutzausrüstung verwenden, erhebliche Vorteile, da ein Auswaschen während der Herstellung und Verarbeitung prinzipiell nicht möglich ist und insbesondere auch bei Lösungsmittelbehandlung (z.B. Chemisch-Reinigung) kein Verlust an Flammwidrigkeit eintritt.

Aufgabe der Erfindung war es deshalb, Acryl- und Modacryl(co)polymerisate, bevorzugt Polyacrylnitrilpolymerisate mit mehr als 85 Gew.-% einpolymerisiertem Acrylnitril, und daraus hergestellte halogenfreie

schwerentflammbare oder selbstverlöschende Fasern auf der Basis von Carboxylgruppen-haltigen, einpolymerisierbaren Monomeren und Monomeren auf Phosphonesterbasis zu entwickeln, wie die dafür benötigten Phosphormonomermengen in diesen Acryl/Modacryl(co)polymerisaten möglichst weitgehend zu verringern.

Es wurde überraschend gefunden, daß spezielle Acrylpolymere, die neben carboxylgruppenhaltigen Comonomeren auch copolymerisierbare Phosphonsäureester enthalten, gut herstellbar sind und sich gut zu farbhellen Fasern verarbeiten lassen, die bezogen auf den Phosphorgehalt eine hohe Flammfestigkeit besitzen.

Gegenstand der Erfindung sind Acryl- und Modacryl-(co)polymerisate, bestehend aus

A) 50 bis 95 Gew.-%, vorzugsweise 55 bis 92 Gew.-%, copolymerisiertem Acrylnitril und anteilig in Mengen bis 15 Gew.-% auch andere von (I), (II) und (III) abweichende Comonomere,

B) 2 bis 20 Gew.-%, vorzugsweise 4 bis 20 Gew.-%, Carboxylgruppen-haltige Monomere der Formel (I)

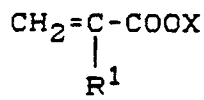

(I),

mit $R^1$ = H, $CH_3$, $CH_2$-COOX,

X = H, Metallionenäquivalent der 1. Gruppe und 2. Haupt- und Nebengruppe des Periodensystems und Al, vorzugsweise Na, K, Mg, Ca, Zn, Al, vorzugsweise Acrylsäure, Methacrylsäure, Itaconsäure und ihre Salze,

C) 3 bis 30, bevorzugt 4 bis 25 Gew.-% Phosphonsäureester der Formel (II) oder (III)

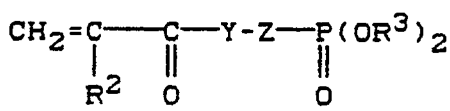

(II)

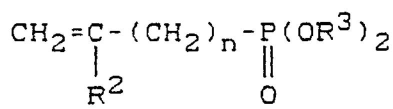

(III)

wobei

n = 1 bis 3, vorzugsweise 1,

$R^2$ = H, Alkyl,

$R^3$ = $C_1$-$C_4$-Alkyl und $C_6$-$C_{12}$-Aryl, vorzugsweise Methyl, Ethyl,

Y = ein zweiwertiger Rest -O-, -NH-, >N-Alkyl,

Z = ein zweiwertiger $C_1$-$C_4$-Alkylen- und $C_6$-$C_{12}$-Arylenrest ist,

einpolymerisiert enthalten.

Zu den Comonomeren, die Acrylnitril anteilig ersetzen können, zählen insbesondere neutrale Comonomere, z.B. Styrol, (Meth)acrylsäureester, wie Acrylsäuremethylester oder Methacrylsäuremethylester, Vinylacetat, Methacrylnitril und/oder auch Comonomere zur Verbesserung der Anfärbbarkeit wie Styrolsulfonat, (Meth)allylsulfonat, 2-Acrylamido-2-methylpropansulfonsäure oder Salze daraus.

Besonders vorteilhaft ist, daß das sehr gute Einbauverhalten der Phosphonester-Monomeren (II) und/oder (III) bei einer Copolymerisation von (I) mit Acrylnitril nicht verändert wird, wenn man die erfindungsgemäßen Copolymerisate herstellt.

Geeignete Verbindungen (II)/(III) sind beispielsweise Methallylphosphonsäurediethylester, Methallylphosphonsäuredimethylester, Acrylsäure-(2-dimethylphosphoryl)-ethylester, Methacrylsäure-(2-dimethylphosphoryl)-ethylester, (Meth)acrylamido-methyl-dimethylphosphonat.

Ein Vergleich der für das Brennverhalten wichtigen LOI-Werte der Copolymerisate und/oder Formkörper (Fasern) zeigt, daß der Phosphorgehalt und damit der Anteil der phosphorhaltigen Monomere (II) und (III) drastisch reduziert werden kann, wenn erfindungsgemäß Acrylnitrilpolymerisate mit 2 bis 20 Gew.-%, vorzugsweise 4 bis 20 Gew.-% Monomeren gemäß der Formel (I) eingesetzt werden.

Geeignete Monomere (I) sind z.B. Acrylsäure, Methacrylsäure und Itaconsäure sowie deren Salze.

Die Polymerisate nach Anspruch 1 können freie Carboxylgruppen enthalten, d.h. das Monomer (I) wird

mit X = H eingesetzt. Die Polymerisate können aber auch Carboxylgruppen enthalten, die teilweise oder vollständig in neutralisierter Form vorliegen. Bei der Herstellung dieser Polymerisate können mehrere Wege beschritten werden: Die Neutralisation kann mit ein-, zwei- und dreiwertigen Metallionenäquivalenten durchgeführt werden, wobei die Neutralisation bei der Polymerisation, bei der Herstellung von Fasermaterialien in der Spinnlösung und/oder heterogen durch Fasernachbehandlung stattfinden kann. Bevorzugte Metallionen sind Na, K, Mg, Ca, Zn, Al. Vorzugsweise sind die Carboxylgruppen zum Teil (bevorzugt mindestens 10 %), oder ganz mit Metallionen der genannten Art neutralisiert.

Verfahren zur Herstellung der erfindungsgemäßen Acryl- und Modacrylpolymerisaten bestehen darin, daß in einer wäßrigen Fällungspolymerisation die nach Anspruch 1 benannten Monomere mit Redoxstartern in Batch-, Semibatch- oder Konti-Fahrweise oder nach dem Verfahren einer Lösungs-, Emulsions- oder Suspensionspolymerisation polymerisiert werden, so daß Acryl- und Modacrylpolymerisate mit einem K-Wert >70 resultieren (zur Definition des K-Wertes siehe: Fikentscher, Cellulosechemie 12 (1932), S. 58). Es können jedoch beliebige Polymerisationsverfahren eingesetzt werden.

Die Polymerisate können, gegebenenfalls unter Zusatz von weiteren üblichen Additiven für PAN-Fasern, z.B. Mattierungsmitteln, Füllstoffen, Pigmenten, Farbstoffen, Stabilisatoren aller Art, Metalloxiden wie Antimonoxid, Al(OH)O, $Al_2O_3$ oder ZnO.hydrat aus Lösungen, vorzugsweise in hochpolaren Amidlösungsmitteln wie Dimethylformamid oder Dimethylacetamid, zu Fäden versponnen und wie üblich nachbehandelt und vorzugsweise zu Fasern geschnitten werden.

Die beanspruchten Acryl- und Modacrylfasern zeigen eine verminderte Brennbarkeit und lassen sich zur Herstellung textiler Materialien, wie Geweben, Gewirken, Gestricken oder Vliesen verwenden.

## Beispiele

Als Prüfmethode für die Entflammbarkeit und das Brennverhalten wurde die Messung des Limiting Oxygen Index (LOI) an Pulverpreßlingen der beanspruchten Acryl- und Modacrylpolymerisaten durchgeführt. Hierbei wird das Volumenverhältnis von Sauerstoff zur Summe aus Stickstoff und Sauerstoff in jenem Gemisch bestimmt, bei dem der Prüfkörper nach der Entzündung gerade noch von oben nach unten weiter brennt. Es gilt:

$$LOI = \frac{O_2\ (Vol\text{-}\%)}{O_2\ (Vol\text{-}\%) + N_2\ (Vol\text{-}\%)} * 100$$

Der LOI-Wert gibt demnach die zur Verbrennung notwendige Sauerstoffkonzentration an. Je höher diese Konzentration ist, umso schwerer brennbar sind die Prüfkörper (zur Definition des LOI-Wertes siehe auch: J.I. Isaacs, Mod. Plast. 47, 3 (1970) 124-129). Nach H. Herlinger (s. oben zitierte Literaturstelle) liegt verminderte Brennbarkeit bei einem LOI-Wert von ca. ≧ 25 vor.

Ein Vergleich der für das Brennverhalten wichtigen LOI-Wertes zeigt, daß der Phosphorgehalt der nicht erfindungsgemäßen Acrylpolymerisate von 2,93 Gew.-% zur Erzielung eines LOI-Wertes von 25,3 auf 1,40 Gew.-% Phosphor in den erfindungsmäßigen Acrylpolymerisaten zur Erzielung eines LOI-Wertes von 24,8 zurückgenommen werden kann, wenn 18,7 Gew.-% Monomer gemäß Formel (I) eingesetzt werden.

Versuche 1 bis 6:
(allgemeine Vorschrift)

Bei 55° C werden unter Rühren und Überleiten von Stickstoff in eine Lösung von 0,1 g Na-peroxidisulfat, 0,5 g Na-disulfat, 3,0 g n-$H_2SO_4$, 20,0 g Monomer-Feed (Zusammensetzung nach Tabelle 1) in 340 g E-Wasser * folgende drei Lösungen gleichmäßig innerhalb 6 h zugetropft:

Lösung I: 341 g E-Wasser, 3 g n-$H_2SO_4$, 16 g Calgon-Lösung (0,1 %ig), 0,8 g Al/K-sulfat, 1,0 g Na-peroxidisulfat,

Lösung II: 360 g E-Wasser, 5 g Na-disulfit,

Lösung III: 300 g Monomer-Feed (Zusammensetzung nach Tabelle 1).

Es wird 30 Minuten nachpolymerisiert, abgesaugt und mit Wasser und Ethanol nachgewaschen und über Nacht bei 50° C getrocknet.

*) E-Wasser = entionisiertes Wasser

In Tabelle 1 sind zusammengefaßt; Zusammensetzung des Monomer-Feed (Acrylnitril, (II) (mit $R^2$, $R^3$ = $CH_3$, Y = -O-, Z = $(CH_2)_2$; (I) mit $R^1$ = $CH_3$ X = H), Zusammensetzung des Polymers, Gesamtumsatz und Umsatz der einpolymerisierten Monomere (II) und (I), K-Wert, Phosphor-Gehalt, Gehalt an (I) und LOI-Wert.

Versuche 7 bis 9 (Vergleichsbeispiele):
(allgemeine Vorschrift wie bei V 1-6)

In Tabelle 2 sind die Zusammensetzungen des Monomer-Feeds, des Polymerisates der Gesamtumsatz, der Umsatz des einpolymerisierten (II) mit $R^2$, $R^3$ = $CH_3$, X = O, Y = $(CH_2)_2$) der K-Wert der Phosphorgehalt und der LOI-Wert nach Verspinnung des Polymerisats, an Fasern gemessen zusammengefaßt.

<u>Tabelle 1</u> (erfindungsgemäß; mit eingebauten Carboxylgruppen)

| V | Monomer-Feed | | | Polymer | | | Umsatz | | | K-Wert | P-Gehalt | AS | LOI |
|---|---|---|---|---|---|---|---|---|---|---|---|---|---|
| | AN[a] (Gew.-%) | (II) | (I) | AN (Gew.-%) | (II) | (I) | Gesamt | (II) | (I) | | (Gew.-%) | (Gew.-%) | |
| 1 | 80,0 | 15,0 | 5,0 | 79,0 | 13,6 | 5,1 | 82,9 | 75,2 | 84,6 | 88,6 | 1,90 | 5,50 | 25,0 |
| 2 | 75,0 | 20,0 | 5,0 | 74,1 | 20,4 | 5,2 | 82,8 | 84,5 | 86,1 | 85,9 | 2,85 | 5,56 | 25,0 |
| 3 | 75,0 | 15,0 | 10,0 | 73,9 | 14,3 | 9,3 | 85,8 | 82,1 | 79,8 | 87,3 | 2,00 | 9,73 | 24,7 |
| 4 | 70,0 | 20,0 | 10,0 | 68,9 | 20,4 | 9,7 | 79,7 | 81,3 | 77,3 | 84,9 | 2,85 | 10,09 | 25,6 |
| 5 | 75,0 | 10,0 | 15,0 | 73,1 | 11,5 | 13,7 | 80,0 | 92,0 | 73,1 | 80,5 | 1,60 | 14,10 | 24,3 |
| 6 | 70,0 | 10,0 | 20,0 | 68,4 | 10,0 | 18,7 | 83,3 | 83,3 | 77,9 | 82,0 | 1,40 | 19,10 | 24,8 |

a) AN: Acrylnitril
AS: Acrylsäure

**Tabelle 2** (Vergleichsversuche ohne eingebaute Carboxylgruppen)

| V | Monomer-Feed AN[a]) (Gew.-%) | Monomer-Feed (II) (Gew.-%) | Polymer AN (Gew.-%) | Polymer (II) (Gew.-%) | Umsatz (%) Gesamt | Umsatz (%) (II) | K-Wert | P-Gehalt (Gew.-%) | LOI |
|---|---|---|---|---|---|---|---|---|---|
| 7 | 89,0 | 11,0 | 88,3 | 10,0 | 77,3 | 70,2 | 69,0 | 1,40 | 21,4 |
| 8 | 83,5 | 16,5 | 83,3 | 16,3 | 79,3 | 78,3 | 72,9 | 2,27 | 24,0 |
| 9 | 78,0 | 22,0 | 77,7 | 21,0 | 79,0 | 75,4 | 84,2 | 2,93 | 25,3 |

AN: Acrylnitril

Versuche 10 bis 15

In ein 3 Liter-Reaktionsgefäß, ausgestattet mit einem wandgängigen Wendelrührer, einem Thermometer, einer $N_2$-Zuleitung und einem aufgesetzten Rückflußkühler, werden als Vorlage die in der Tabelle 3 genannten Komponenten eingefüllt. Nach Temperierung auf 55° C wird die Polymerisation durch Zugabe

der Lösungen 1. + 2. gestartet. Danach werden bei gleicher Temperatur innerhalb von 6 Stunden die Lösungen 3. und 4. und das Monomerengemisch 5. gleichlaufend zudosiert. Das gebildete Fällungspolymerisat wird filtriert, der Filterrückstand durch mehrmaliges Aufschlämmen in Wasser gewaschen und anschließend getrocknet.

Umsatzwerte, Analysenbefunde, die das Molekulargewicht der Polymerisate kennzeichnenden K-Werte und zugehörige LOI-Werte, an Fasern gemessen, sind in der Tabelle 4 zusammengefaßt.

**Tabelle 3**

| | Versuche | | | | | |
|---|---|---|---|---|---|---|
| | 10 | 11 | 12 | 13 | 14 | 15 |
| **Vorlage** | | | | | | |
| Wasser (entionisiert) | 560 g | → | → | → | → | → |
| 1 n-Schwefelsäure | 7,4 g | → | → | → | → | → |
| Acrylnitril | 32 g | 34 g | 34 g | 34 g | 32 g | 34 g |
| Methallylphosphonsäure-diethylester | 4 g | 2 g | 4 g | 4 g | 6 g | 4 g |
| Acrylsäure | 4 g | 4 g | 2 g | - | - | - |
| Methacrylsäure | - | - | - | 2 g | 2 g | - |
| Itaconsäure | - | - | - | - | - | 2 g |
| **Lösung 1** | | | | | | |
| Wasser (entionisiert) | 50 g | → | → | → | → | → |
| K-persulfat | 0,15 g | → | → | → | → | → |
| **Lösung 2** | | | | | | |
| Wasser (entionisiert) | 50 g | → | → | → | → | → |
| Na-disulfat | 0,5 g | → | → | → | → | → |
| **Lösung 3** | | | | | | |
| Wasser (entionisiert) | 712 g | → | → | → | → | → |
| 1 n-Schwefelsäure | 8 g | → | → | → | → | → |
| K/Al-sulfat | 1 g | → | → | → | → | → |
| K-persulfat | 2,0 g | → | → | → | → | → |
| **Lösung 4** | | | | | | |
| Wasser (entionisiert) | 720 g | → | → | → | → | → |
| Na-disulfat | 7,4 g | → | → | → | → | → |
| **Monomergemisch 5** | | | | | | |
| Acrylnitril | 448 g | 476 g | 476 g | 476 g | 448 g | 476 g |
| Methallylphosphonsäure-diethylester | 56 g | 28 g | 56 g | 56 g | 84 g | 56 g |
| Acrylsäure | 56 g | 56 g | 28 g | - | - | - |
| Methacrylsäure | - | - | - | 28 g | 28 g | - |
| Itaconsäure | - | - | - | - | - | 28 g |

<u>Tabelle 4</u>

| | Versuche | | | | | |
|---|---|---|---|---|---|---|
| | 10 | 11 | 12 | 13 | 14 | 15 |
| Umsatz (%) | 74,8 | 78,0 | 76,8 | 75,8 | 68,8 | 53,5 |
| <u>Zusammensetzung</u> (Gew.-%)* | | | | | | |
| Acrylnitril | 81,6 | 87,9 | 86,0 | 83,3 | 78,3 | 82,6 |
| Methallylphosphonsäure-diethylester | 8,15 | 4,5 | 9,4 | 11,3 | 15,0 | 13,8 |
| Acrylsäure | 9,7 | 7,05 | 4,2 | - | - | - |
| Methacrylsäure | - | - | - | 4,85 | 6,1 | - |
| Itaconsäure | - | - | - | - | - | 2,8 |
| K-Wert (0,5 %ig DMF) | 85,6 | 89,5 | 96,3 | 96,6 | 80,5 | 84,6 |
| LOI-Wert (% $O_2$) | 24,7 | 24,5 | 24,1 | 24,5 | 26,5 | 25,0 |

gegebenenfalls Vergleichswerte angeben

* aus elementaranalytischen Daten
Die untersuchten Proben wurden mehrfach mit Ethanol/$H_2O$-Gemischen (90/10) extrahiert

Spinnversuch 1:

Mit dem Polymerisat aus dem Versuch 1 wurde ein Naßspinnversuch durchgeführt. Das Polymerisat wurde in Dimethylformamid gelöst und in ein Fällbad (Dimethylformamid/$H_2O$ = 3:7) eingesponnen. Es

wurde eine 8/0,3-Düse verwendet. Der Abzug betrug 6,0 m/min. Anschließend wurden die Bändchen 1:4 und 1:7,3 bei 98° C in Wasser verstreckt und unter Schrumfzulassung bei 140° C fixiert. Die Ergebnisse sind in Tabelle 5 zusammengefaßt.

Tabelle 5

| Versuch | | 1 | |
|---|---|---|---|
| K-Wert | | 88,6 | |
| AN[a] | | 79,0 | |
| (II) | | 13,6 | |
| (I) | | 5,5 | |
| LOI | | 25,0 | |
| Verstr. 1: | 4,0 | | 7,3 |
| Titer (dtex) | 2,75 | | 1,81 |
| Reißfestigkeit (cN/dtex) | 1,67 | | 2,33 |
| Reißdehnung (%) | 11,1 | | 11,8 |
| Kochschrumpf (%) | 23,0 | | 22,6 |

a) = Acrylnitril

Spinnversuch 2:

Aus einem gemäß Beispiel 10 hergestellten Acrylnitril/ Acrylsäure/Methallylphosphonsäureester-Copolymeren mit einem K-Wert von 85,6 wurde eine 27 Gew.-%ige Lösung in Dimethylformamid hergestellt. Diese wurde über einen kurzen Trockenspinnschacht mehrfädig versponnen. Die anfallenden Filamente wurden in einem 2-stufig geführten Nachbehandlungsprozeß durch Strecken und Thermofixieren zu einem Mullfilamentgarn verarbeitet.

Spinnbedingungen:

| | |
|---|---|
| Düse: | 16 x 0,2 mm |
| Fördermenge: | 16 g Spinnlösung / min. |
| Temperatur: | Schachtwandtemperatur 200° C, Luft 250° C |

Nachbehandlungsbedingungen

| | |
|---|---|
| 1. Stufe: | Verstreckung 1:7 (95° C/$H_2O$) |
| 2. Stufe: | Thermofixierung in einem Rohrofen (161° C) unter Schrumpfzulassung Endverstreckung 1:5,3 |

Faserdaten:

Titer 114 (48-fädig) dtex

| | |
|---|---|
| Festigkeit: | 3,22 cN/dtex |
| Dehnung: | 25,4 % |

E-Modul: 76,3 cN/dtex

**Patentansprüche**

**1.** Copolymerisate und daraus gebildete Formkörper, besonders schwerentflammbare Fasern, enthaltend
A) 50 bis 95 Gew.-% copolymerisiertes Acrylnitril und anteilig, in Mengen bis 15 Gew.-%, andere von B) und C) abweichende, copolymerisierte Monomere,
B) 2 bis 20 Gew.-% copolymerisierte, ethylenisch ungesättigte Carbonsäuren oder ihre Salze der allgemeinen Formel (I)

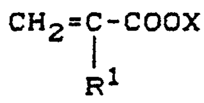 (I),

mit $R^1$ = H, $CH_3$, $CH_2$-COOX,

X = H, Metallionenäquivalent, $NH_4$

mit vorzugsweise 1-, 2- oder 3-wertigen Metallsalzen der 1., 2. und 3. Haupt- und Nebengruppen des Periodensystems,
C) 3 bis 30 Gew.-% copolymerisierte Einheiten aus Phosphonsäureestern enthaltenden Monomeren der allgemeinen Formel (II) oder (III)

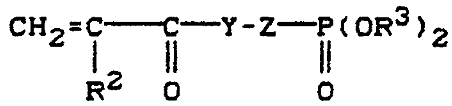 (II)

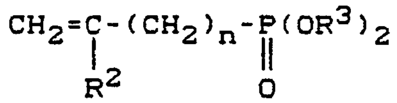 (III)

wobei
n = 1 bis 3, vorzugsweise n = 1,
$R^2$ = H, Alkyl,
$R^3$ = $C_1$-$C_4$-Alkyl und $C_6$-$C_{12}$-Aryl
Y = zweiwertiger Rest -O-, -NH-, >N-Alkyl,
Z = zweiwertiger $C_1$-$C_4$-Alkylen- und $C_6$-$C_{12}$-Arylenrest,
D) gegebenenfalls übliche Mengen an üblichen Zusätzen.

**2.** Copolymerisate und daraus gebildete Formkörper gemäß Anspruch 1 mit K-Wert >70.

**3.** Fasermaterialien und Folien aus Polymerisaten gemäß Anspruch 1, die in copolymerisierter Form
A) 55 bis 92 Gew.-% Acrylnitril und anteilig bis zu 15 Gew.-% auch andere von B) und C) abweichenden Monomere enthalten,

dadurch gekennzeichnet, daß die Polymerisate in copolymerisierter Form
B) 4 bis 20 Gew.-% ethylenisch ungesättigte Carbonsäuren der allgemeinen Formel (I)

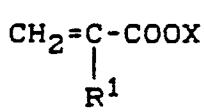 (I),

mit $R^1$ = H, $CH_3$, $CH_2$-COOX,

X = H, Metallionenäquivalent, $NH_4$

C) 4 bis 25 Gew.-% Phosphonsäureester-haltige Monomere der allgemeinen Formel (II) oder (III)

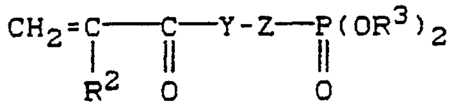

(II)

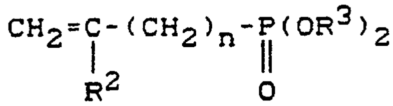

(III)

wobei

n = 1 bis 3, vorzugsweise n = 1,

$R^2$ = H, Alkyl,

$R^3$ = $C_1$-$C_4$-Alkyl und $C_6$-$C_{12}$-Aryl

Y = zweiwertiger Rest -O-, -NH-, >N-Alkyl,

Z = zweiwertiger $C_1$-$C_4$-Alkylen- und $C_6$-$C_{12}$-Arylenrest enthalten und einen LOI-Wert >24,0 aufweisen.

**4.** Verwendung von Fasermaterialien, die aus Polymeren gemäß Anspruch 1 gebildet werden, zur Herstellung von schwerentflammbaren textilen Artikeln.

European Patent Office

# EUROPEAN SEARCH REPORT

Application Number

EP 90124700.7

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| D,X | TEXTILPRAXIS INTERNATIONAL, Band 34, Nr. 9, 1979, Konradin-Verlag H. HERLINGER et al. "Herstellung schwer entflammbarer Polyacrylnitrilfasern durch Copolymerisation" Seiten 1100-1113 * Gesamt * | 1,3,4 | C 08 F 220/44<br>D 01 F 6/38 |
| A | US - A - 4 041 230 (HUBER et al.) * Ansprüche 1,2 * | 1,3,4 | |
| A | DE - B1 - 2 449 468 (HÖCHST AG) * Anspruch 1 * | 1,3,4 | |
| A | US - A - 4 444 969 (YOUNES) * Ansprüche 1,8,9 * | 1,3,4 | TECHNICAL FIELDS SEARCHED (Int. Cl.5) |
| A | EP - A2 - 0 112 520 (CASSELLA AKTIENGESELLSCHAFT) * Ansprüche 1,12 * | 1 | C 08 F 30/00<br>C 08 F 220/00<br>C 08 F 230/00<br>D 01 F 6/00 |

The present search report has been drawn up for all claims

| Place of search | Date of completion of the search | Examiner |
|---|---|---|
| WIEN | 23-04-1991 | PUSTERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document